# EUROPÄISCHE PATENTSCHRIFT

(11) **EP 2 483 546 B1**
(45) Veröffentlichungstag und Bekanntmachung des Hinweises auf die Patenterteilung: **27.05.2015**
(21) Anmeldenummer: 10770745.7
(22) Anmeldetag: 01.10.2010
(51) Int. Cl.: F02D 41/22, F02D 41/38

(54) **SYSTEM UND VERFAHREN ZUR MESSUNG VON EINSPRITZVORGÄNGEN IN EINER VERBRENNUNGSKRAFTMASCHINE**
SYSTEM AND METHOD TO MEASURE INJECTION EVENTS IN AN INTERNAL COMBUSTION ENGINE
APPARAIL ET PROCÉDÉ POUR MESURER DES ÉVÉNEMENTS D'INJECTION

(30) Priorität: 01.10.2009 DE 102009043718
(43) Veröffentlichungstag der Anmeldung: 08.08.2012
(73) Patentinhaber: AVL List GmbH, 8020 Graz (AT)
(72) Erfinder: KAMMERSTETTER, Heribert, A-5411 Oberalm (AT)
(74) Vertreter: Rütten, Peter Laurenz
(86) Internationale Anmeldenummer: PCT/EP2010/064626
(87) Internationale Veröffentlichungsnummer: WO 2011/039343

(56) Entgegenhaltungen:
- DE-A1- 19 740 608
- DE-B3- 10 331 228
- DE-C1- 19 946 506

## Beschreibung

Die Erfindung betrifft ein System zur Messung von Einspritzvorgängen in einer Verbrennungskraftmaschine mit einem Tank, in dem Kraftstoff gespeichert ist, einem Speicherbehälter, in dem verdichteter Kraftstoff gespeichert ist, zumindest einem Einspritzventil, welches am Speicherbehälter angeordnet ist, einer Kraftstoffleitung, in der eine Kraftstoffförderpumpe und eine Kraftstoffhochdruckpumpe zur Förderung des Kraftstoffs in den Speicherbehälter angeordnet sind, einem Drucksensor, über den der Druck im Speicherbehälter bestimmbar ist und Mittel zur Erfassung der Ansteuerdaten der Einspritzventile sowie ein Verfahren zur Messung von Einspritzvorgängen mit einem derartigen System.

Derartige Systeme sind im Wesentlichen bekannt und bilden den Aufbau einer Common-Rail-Anlage moderner Verbrennungskraftmaschinen. Die hierin angeordneten Drucksensoren in den Speicherbehältern dienen insbesondere zur Fehleranalyse derartiger Systeme.

So wird in der DE 199 46 506 C1 ein Verfahren zum Erkennen von Fehlfunktionen im Drucksystem eines Motors vorgeschlagen, bei dem ein Drucksignal eines Drucksensors zeitlich aufgelöst registriert wird, so dass periodische Druckschwankungen durch das Betätigen der Injektoren und die Kolbenhübe der Kolbenpumpe beobachtet werden können. Der Verlauf des Drucksignals wird gemessen und mit einem hinterlegten Muster verglichen, so dass bei Abweichungen des Musters hinsichtlich der Amplitude oder der Periodizität auf einen Fehler geschlossen wird. Zusätzlich wird die Differenz zwischen größtem und kleinstem Druckmesssignal innerhalb einer Periode ermittelt. Bei Abweichung dieser Differenz vom hinterlegten Muster wird ebenfalls auf einen Fehler im System geschlossen. Die Bestimmung eines Einspritzverlaufes wird nicht offenbart.

Des Weiteren ist aus der DE 10 2005 004 423 B3 ein Verfahren zur Überwachung der Funktionsfähigkeit eines Einspritzsystems bekannt, bei dem ebenfalls über den gemessenen Druckverlauf eines am Speicherbehälter angebrachten Sensors bei Abweichung von einem Solldruckverlauf auf einen Fehler geschlossen wird. Dabei wird sowohl das zeitliche Verhalten des Drucks als auch der Absolutdruck berücksichtigt. Auch mit diesem Verfahren ist die Bestimmung eines tatsächlichen Einspritzverlaufes für einzelne Ventile nicht möglich.

Ein ähnlicher Aufbau wird auch in der DE 197 40 608 A1 offenbart. Hierin wird jedoch über den Drucksensor ein Druckverlauf im Speicherbehälter hochaufgelöst erfasst und aus dem Druckverlauf ein Muster gewonnen, über welches eine kraftstoffeinspritzbezogene Kenngröße, wie Einspritzmenge oder Einspritzdauer, individuell für jeden Brennraum und jeden Einspritzvorgang bestimmt wird. Dies erfolgt über ein neuronales Netzwerk. Dieses Netzwerk muss jedoch zunächst an einem Prüfstand trainiert werden, um plausible Ergebnisse zu erreichen. Insbesondere Absolutgrößen der Einspritzmengen sind ohne vorheriges Lernverfahren des Netzwerkes nicht bestimmbar. So muss für jeden Motor ein separates Lernverfahren durchgeführt werden, so dass eine Nutzung in der Serie nicht sinnvoll ist.

Es stellt sich daher die Aufgabe, ein System und ein Verfahren zur Messung von Einspritzvorgängen in einer Verbrennungskraftmaschine bereitzustellen, mit denen neben einer Fehlerdetektion auch eine genaue Bestimmung von Einspritzverläufen möglich ist. Dabei sollen auch Absolutwerte ermittelt werden können und Vor- und Haupteinspritzungen für jeden einzelnen Zylinder unterschieden werden können.

Diese Aufgabe wird durch ein System mit den Merkmalen des kennzeichnenden Teils des Anspruchs 1 sowie durch ein Verfahren gemäß Anspruch 7 gelöst.

Es wird somit eine Rechnereinheit verwendet, die mit einer in der Kraftstoffleitung angeordneten Vorrichtung zur Messung zeitlich aufgelöster volumetrischer Durchflussvorgänge und dem Drucksensor über Datenübertragungsleitungen zur Berechnung eines Einspritzverlaufs durch Superposition der aus den gemessenen Druckverläufen des Drucksensors am Speicherbehälter berechneten Speicherbehälterdurchflüssen und den Messwerten der Vorrichtung zur Messung zeitlich aufgelöster volumetrischer Durchflussvorgänge in der Kraftstoffleitung verbunden ist. So können über die Mittel zur Erfassung der Ansteuerdaten ermittelte Ansteuerzeiten, Messwerte des Drucksensors am Speicherbehälter und Messwerte der Vorrichtung zur Messung zeitlich aufgelöster volumetrischer Durchflussvorgänge in der Kraftstoffleitung an die Rechnereinheit übertragen werden und aus diesen Messwerten die Einspritzverläufe der Einspritzventile in der Rechnereinheit durch Superposition der aus den gemessenen Druckverläufen des Drucksensors am Speicherbehälter berechneten Speicherbehälterdurchflüssen und den Messwerten der Vorrichtung zur Messung zeitlich aufgelöster volumetrischer Durchflussvorgänge in der Kraftstoffleitung berechnet werden. Durch die Verwendung der zusätzlichen Vorrichtung zur Messung zeitlich aufgelöster volumetrischer Durchflussvorgänge kann der aus dem Druckverlauf gewonnene Wert auf einen kalibrierten volumetrischen Durchflusswert zurückgerechnet werden, so dass auch Aussagen zu Absolutgrößen der eingespritzten Mengen möglich werden. Des Weiteren können Unterschiede zwischen zwei Injektoren und daraus resultierend Fehler im System identifiziert und zugeordnet werden.

In einer weiterführenden Ausführung ist am Speicherbehälter ein Temperatursensor angeordnet, der mit der Rechnereinheit verbunden ist. Entsprechend wird mittels des Temperatursensors am Speicherbehälter die Temperatur im Speicherbehälter gemessen, der Temperaturverlauf an die Rechnereinheit übertragen, in der Rechnereinheit das Kompressibilitätsmodul des Kraftstoffs berechnet und anschließend das errechnete Kompressibilitätsmodul bei der Bestimmung des Einspritzmengenverlaufs verwendet. Hierdurch gelingt eine sehr genaue Bestimmung der Absolutgrößen der Einspritzmengen.

Vorzugsweise ist am Eintritt der Hochdruckpumpe ein Drucksensor angeordnet, der mit der Rechnereinheit verbunden ist. Die Messwerte dieses Drucksensors werden an die Rechnereinheit übertragen, aus den Messwerten ein Hochdruckpumpendurchfluss in der Rechnereinheit berechnet, und anschließend der berechnete Durchfluss mit den Messwerten der Vorrichtung zur Messung zeitlich aufgelöster volumetrischer Durchflussvorgänge in der Kraftstoffleitung und den berechneten Speicherbehälterdurchflüssen superponiert. Hieraus wird ein berichtigter Einspritzmengenverlauf berechnet, der die Scheindurchflüsse durch die Hochdruckpumpe infolge des sich ändernden Solldruckes im Rail und der daraus resultierenden sich ändernden und zu fördernden Massen ebenfalls berücksichtigt.

In einer weiterführenden Ausführung ist am Eintritt der Hochdruckpumpe ebenfalls ein Temperatursensor angeordnet, der mit der Rechnereinheit verbunden ist, so dass mittels des Temperatursensors am Eingang der Hochdruckpumpe die Temperatur am Eingang der Hochdruckpumpe gemessen wird, der Temperaturverlauf an die Rechnereinheit übertragen wird, in der Rechnereinheit das Kompressibilitätsmodul des Kraftstoffs an der Hochdruckpumpe berechnet wird und das berechnete Kompressibilitätsmodul bei der Bestimmung des Hochdruckpumpendurchflusses verwendet wird. Hieraus ergibt sich ein abermals verbessertes Ergebnis bei der Berechnung des Einspritzmengenverlaufes, da der gemessene Scheindurchfluss ebenfalls exakt bestimmbar wird.

Vorzugsweise führt eine Kraftstoffrückführleitung von der Hochdruckpumpe oder vom Speicherbehälter über ein Druckregelventil zum Tank, wodurch eine zusätzliche Möglichkeit zur Druckregelung geschaffen wird.

In einer hierzu weiterführenden Ausführung bildet die Kraftstoffleitung in dem Bereich, in dem die Vorrichtung zur Messung zeitlich aufgelöster volumetrischer Durchflussvorgänge angeordnet ist, die Kraftstoffrückführleitung. Dies erspart die Anordnung zusätzlicher Sensoren beziehungsweise von weiteren Vorrichtungen zur Messung von Durchflussvorgängen in den dann zusätzlich anzuordnenden Rückführleitungen.

Entsprechend werden ein System sowie ein zugehöriges Verfahren geschaffen, mit denen Einspritzmengen in einem Common-Rail-System exakt bestimmt werden können. Dabei ist eine Auflösung sowohl für jeden einzelnen Injektor möglich, wobei sogar Vor- und Haupteinspritzungen unterschieden werden können. Es erfolgt somit eine zyklusgenaue und zylinderselektive Berechnung der Einspritzmengenverläufe. Des Weiteren ist eine Nutzung zur Diagnose des Einspritzsystems möglich.

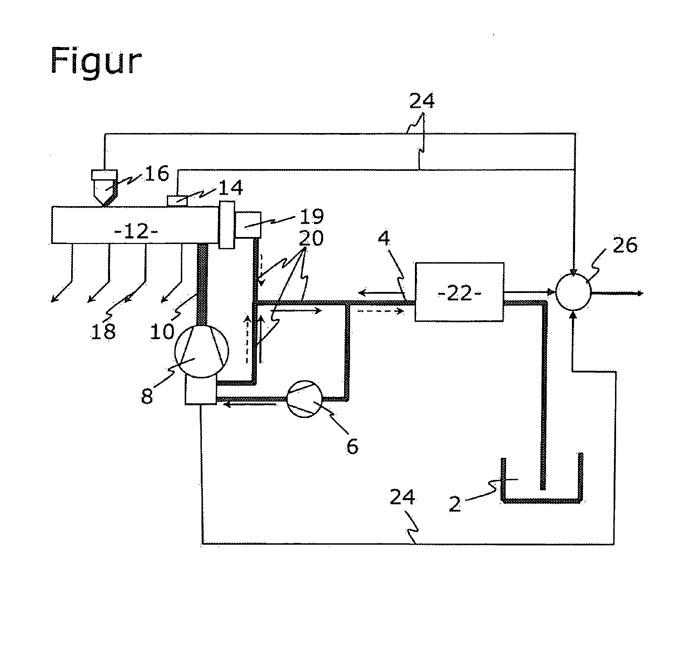

Ein Ausführungsbeispiel eines erfindungsgemäßen Systems ist in Figur 1 schematisch dargestellt. Anhand dieser Figur wird die Erfindung im Folgenden beschrieben.

Das dargestellte System umfasst im Wesentlichen die Teile eines bekannten Common-Rail-Kraftstoffsystems. Ein Tank 2 ist über eine Kraftstoffleitung 4 mit einer Kraftstoffpumpe 6 verbunden. Diese fördert Kraftstoff zu einer Kraftstoffhochdruckpumpe 8, welche zumeist als Kolbenpumpe ausgeführt wird. Über eine Hochdruckleitung 10 ist die Kolbenpumpe fluidisch mit einem Speicherbehälter 12 verbunden, in dem ein Drucksensor 14 und ein Temperatursensor 16 angeordnet sind. Am Speicherbehälter 12 sind außerdem im vorliegenden Ausführungsbeispiel vier Kraftstoffeinspritzventile 18 angeordnet, über die Kraftstoff in zugeordnete Zylinder einer Verbrennungskraftmaschine eingespritzt werden kann.

Des Weiteren ist am Speicherbehälter 12 ein Druckregelventil 19 angeordnet, welches ebenso wie der Eingang der Hochdruckpumpe 8 mit einer Kraftstoffrückführleitung 20 verbunden ist, über die überschüssiger Kraftstoff zum Tank 2 zurückgeführt werden kann. Diese Kraftstoffrückführleitung 20 mündet zunächst in die Kraftstoffleitung 4, in der in diesem Bereich entsprechend ein Differenzfluss beziehungsweise ein resultierender Kraftstofffluss entsteht.

Erfindungsgemäß wird diese resultierende, in den Speicherbehälter 12 geförderte Kraftstoffmenge über eine Vorrichtung 22 zur Messung volumetrischer Durchflussvorgänge gemessen, die in der Kraftstoffleitung 4 zwischen dem Tank 2 und der Verzweigung zur Kraftstoffrückführleitung 20 angeordnet ist.

Eine derartige Vorrichtung 22 ist aus der DE 103 31 228 B3 bekannt. Sie besteht aus einem rotatorischen Verdränger sowie einem in einem Bypasskanal zum Verdränger angeordneten translatorischen Volumendifferenzaufnehmer in Form eines in einer Messkammer angeordneten Kolbens. Die Auslenkung des Kolbens wird kontinuierlich erfasst, wobei die Pumpe im Wesentlichen mit konstanter Drehzahl über einen Zyklus betrieben wird. Durch die Förderung und Rückförderung des Kraftstoffs entsteht eine überlagerte Bewegung des Kolbens, die ein Maß für die tatsächlich in den Speicherbehälter geförderte Menge ist. In der Messkammer sind zusätzlich ein Drucksensor sowie ein Temperatursensor angeordnet, deren Messwerte einer Auswerteeinheit zugeführt werden, so dass durch Druck- und Temperaturänderungen verursachte Scheindurchflüsse eliminiert werden können. Die Vorgänge zwischen der Hochdruckpumpe 8 und den Injektoren 18 können jedoch von dieser Vorrichtung 22 nicht gemessen werden.

Aus diesem Grund sind der Drucksensor 14, der Temperatursensor 16 und die Vorrichtung 22 zur Messung volumetrischer Durchflussvorgänge über Datenübertragungsleitungen 24 mit einer Rechnereinheit 26 verbunden. In dieser Rechnereinheit 26 ist ein Rail-Modell zur Berechnung zeitlich aufgelöster volumetrischer Durchflussvorgänge hinterlegt. Zusätzlich können Modelle für verschiedene Leitungen und Volumina hinterlegt werden, die eine gewisse Größe aufweisen und somit Scheindurchflüsse durch Druck- und Temperaturänderungen verursachen können. So kann beispielsweise das dargestellte Pump-Modell verwendet werden, welches die Ergebnisse des Rail-Modells zusätzlich verbessert. Hierzu müssen jedoch im Bereich der Hochdruckpumpe 8 weitere Sensoren, wie Drucksensor und Temperatursensor angebracht werden.

Bei der Berechnung des momentanen Kraftstoffverbrauchs muss berücksichtigt werden, dass durch die vorhandenen Volumina, Insbesondere im Speicherbehälter 12 geringe Druckänderungen aufgrund der Kompressibilität des Kraftstoffs zu deutlich geänderten gemessenen Volumina führen.

Erfindungsgemäß werden zunächst die Ansteuerdaten beziehungsweise Ansteuerzeiten der Einspritzventile 18 an die Rechnereinheit 26 übertragen. Dies kann durch Übertragung der Daten direkt von der Motorsteuereinheit zur Rechnereinheit erfolgen. Ebenfalls denkbar ist die Messung der Öffnungszeiten über entsprechende Strom- oder Positionssensoren.

Gleichzeitig werden die Messwerte des Drucksensors 14 am Speicherbehälter 12 und die Messwerte der Vorrichtung 22 zur Messung zeitlich aufgelöste volumetrischer Durchflussvorgänge in der Kraftstoffleitung 4 an die Rechnereinheit 26 übertragen. Die mittels des Drucksensors 14 gemessenen Druckänderungen werden zunächst mit einem beliebigen Proportionalitätsfaktor gewichtet und über einen ausreichenden Zeitraum addiert. Anschließend wird die Summe dieser gewichteten Druckänderungen mit dem gemessenen Durchfluss der Vorrichtung 22 zur Messung zeitlich aufgelöster volumetrischer Durchflussvorgänge verglichen, woraus der Proportionalitätsfaktor nun durch Superposition berechnet werden kann. Unter der Voraussetzung eines konstanten Proportionalitätsfaktors kann daraufhin für jede einzelne Teilmenge, also für jeden beliebigen Zeitabschnitt, ein konkreter Volumenstrom und somit Einspritzverlauf über diesen Zeitabschnitt berechnet werden.

Es hat sich gezeigt, dass hierbei auch sehr kleine Zeitabschnitte um die Einspritzung herum verwendet werden können.

Eine weitere Verbesserung des Ergebnisses kann erzielt werden, indem zusätzlich zum Druck die Temperatur im Speicherbehälter gemessen wird. Schwankungen der Temperatur im Speicherbehälter führen zu Scheindurchflüssen, welche jedoch mittels der Formel *ΔV_{T}* =*V₀·α·ΔT* berechnet werden können. Mit den entsprechenden Ergebnissen können somit im Folgenden die ermittelten Durchflussmengen korrigiert werden.

Durch kontinuierliches Messen des Druckes am Eintritt der Hochdruckpumpe kann zusätzlich ein Hochdruckpumpendurchfluss berechnet werden, mit dem der Druckverlauf aufgrund einer Einspritzung von einer Druckänderung aufgrund der Förderung der Hochdruckpumpe getrennt werden kann. Hierzu wird der berechnete Einspritzmengenverlauf berichtigt, indem der aus dem gemessenen Druck und der gemessenen Temperatur folgende Pumpendurchfluss mit den Messwerten der Vorrichtung zur Messung zeitlich aufgelöster volumetrischer Durchflussvorgänge in der Kraftstoffleitung superponiert wird. Somit können die Einspritzmengen exakt von den Fördermengen getrennt werden. Selbstverständlich kann auch hier durch Messen der Temperatur, das Kompressibilitätsmodul entsprechend berichtigt werden, um wiederum zu verbesserten Ergebnissen zu gelangen.

Mit diesen Verfahren und dem beschriebenen Aufbau können Einspritzvorgänge in einem Kraftstoffhochdrucksystem eines Verbrennungsmotors mit hoher Genauigkeit quantifiziert werden. Es ergibt sich sogar die Möglichkeit, Vor- und Haupteinspritzungen voneinander zu trennen und die Einspritzmengen zu ermitteln. Selbstverständlich ist auch eine Identifizierung defekter Einspritzventile möglich. Probleme an Einspritzventilen, die zu geänderten Einspritzmengen führen, können zunächst identifiziert und anschließend durch entsprechende Regelungen und angepasste Öffnungszeiten ausgeglichen werden.

## Patentansprüche

1. System zur Messung von Einspritzvorgängen in einer Verbrennungskraftmaschine mit
einem Tank (2), in dem Kraftstoff gespeichert ist,
einem Speicherbehälter (12), in dem verdichteter Kraftstoff gespeichert ist,
zumindest einem Einspritzventil (18), welches am Speicherbehälter (12) angeordnet ist,
einer Kraftstoffleitung (4), in der eine Kraftstoffförderpumpe (6) und eine Kraftstoffhochdruckpumpe (8) zur Förderung des Kraftstoffs in den Speicherbehälter (12) angeordnet sind,
einem Drucksensor (14), über den der Druck im Speicherbehälter (12) bestimmbar ist und
Mittel zur Erfassung der Ansteuerdaten der Einspritzventile (18),
**gekennzeichnet durch**
dass eine Rechnereinheit (26), die mit einer in der Kraftstoffleitung (4) angeordneten Vorrichtung (22) zur Messung zeitlich aufgelöster volumetrischer Durchflussvorgänge und dem Drucksensor (14) über Datenübertragungsleitungen (24) zur Berechnung eines Einspritzverlaufs **durch** Superposition der aus den gemessenen Druckverläufen des Drucksensors (14) am Speicherbehälter (12) berechneten Speicherbehälterdurchflüssen und den Messwerten der Vorrichtung (22) zur Messung zeitlich aufgelöster volumetrischer Durchflussvorgänge in der Kraftstoffleitung (4) verbunden ist.

2. System zur Messung von Einspritzvorgängen in einer Verbrennungskraftmaschine nach Anspruch 1,
**dadurch gekennzeichnet, dass**
am Speicherbehälter (12) ein Temperatursensor (16) angeordnet ist, der mit der Rechnereinheit (26) verbunden ist.

3. System zur Messung von Einspritzvorgängen in einer Verbrennungskraftmaschine nach einem der Ansprüche 1 oder 2,
**dadurch gekennzeichnet, dass**
am Eintritt der Hochdruckpumpe (8) ein Drucksensor angeordnet ist, der mit der Rechnereinheit (26) verbunden ist.

4. System zur Messung von Einspritzvorgängen in einer Verbrennungskraftmaschine nach Anspruch 3,
**dadurch gekennzeichnet, dass**
am Eintritt der Hochdruckpumpe (8) ein Temperatursensor angeordnet ist, der mit der Rechnereinheit (26) verbunden ist.

5. System zur Messung von Einspritzvorgängen in einer Verbrennungskraftmaschine nach einem der vorhergehenden Ansprüche,
**dadurch gekennzeichnet, dass**
eine Kraftstoffrückführleitung (20) von der Hochdruckpumpe (8) oder vom Speicherbehälter (12) über ein Druckregelventil (19) zum Tank (2) führt.

6. System zur Messung von Einspritzvorgängen in einer Verbrennungskraftmaschine nach Anspruch 5,
**dadurch gekennzeichnet, dass**
die Kraftstoffleitung (4) in dem Bereich, in dem die Vorrichtung (22) zur Messung zeitlich aufgelöster volumetrischer Durchflussvorgänge angeordnet ist, die Kraftstoffrückführleitung (20) bildet.

7. Verfahren zur Messung von Einspritzvorgängen in einer Verbrennungskraftmaschine mit einem System gemäß einem der vorhergehenden Ansprüche mit folgenden Schritten:
- Übertragen der über die Mittel zur Erfassung der Ansteuerdaten ermittelten Ansteuerzeiten, der Messwerte des Drucksensors (14) am Speicherbehälter (12) und der Messwerte der Vorrichtung (22) zur Messung zeitlich aufgelöster volumetrischer Durchflussvorgänge in der Kraftstoffleitung (4) an die Rechnereinheit (26)
- Berechnen des Einspritzverlaufs der Einspritzventile (18) in der Rechnereinheit (26) durch Superposition der aus den gemessenen Druckverläufen des Drucksensors (14) am Speicherbehälter (12) berechneten Speicherbehälterdurchflüssen und den Messwerten der Vorrichtung (22) zur Messung zeitlich aufgelöster volumetrischer Durchflussvorgänge in der Kraftstoffleitung (4).

8. Verfahren zur Messung von Einspritzvorgängen in einer Verbrennungskraftmaschine nach Anspruch 7,
**dadurch gekennzeichnet, dass**
- mittels des Temperatursensors (16) am Speicherbehälter (12) die Temperatur im Speicherbehälter (12) gemessen wird,
- der Temperaturverlauf an die Rechnereinheit (26) übertragen wird,
- in der Rechnereinheit (26) das Kompressibilitätsmodul des Kraftstoffs berechnet wird und
- das Kompressibilitätsmodul bei der Bestimmung des Einspritzmengenverlaufs verwendet wird.

9. Verfahren zur Messung von Einspritzvorgängen in einer Verbrennungskraftmaschine nach einem der Ansprüche 7 oder 8, **dadurch gekennzeichnet, dass**
- die Messwerte des Drucksensors am Eintritt der Hochdruckpumpe (8) an die Rechnereinheit (26) übertragen werden,
- aus den Messwerten ein Hochdruckpumpendurchfluss der Hochdruckpumpe (8) in der Rechnereinheit (26) berechnet wird
- der berechnete Durchfluss mit den Messwerten der Vorrichtung (22) zur Messung zeitlich aufgelöster volumetrischer Durchflussvorgänge in der Kraftstoffleitung (4) und den berechneten Spelcherbehälterdurchflüssen superponiert wird und daraus ein berichtigter Einspritzmengenverlauf berechnet wird.

10. Verfahren zur Messung von Einspritzvorgängen in einer Verbrennungskraftmaschine nach Anspruch 9,
**dadurch gekennzeichnet, dass**
- mittels des Temperatursensors am Eingang der Hochdruckpumpe (8) die Temperatur am Eingang der Hochdruckpumpe (8) gemessen wird,
- der Temperaturverlauf an die Rechnereinheit (26) übertragen wird,
- in der Rechnereinheit (26) das Kompressibilitätsmodul des Kraftstoffs an der Hochdruckpumpe (8) berechnet wird und
- das berechnete Kompressibilitätsmodul bei der Bestimmung des Hochdruckpumpendurchflusses verwendet wird.

## Claims

1. A system for measuring injection processes in an internal combustion engine, comprising
a tank (2) holding fuel,
a storage container (12) holding compressed fuel,
at least one injection valve (18) arranged at the storage container (12),
a fuel line (4) in which a fuel conveying pump (6) and a high-pressure fuel pump (6) for conveying the fuel into the storage container (12) are arranged,
a pressure sensor (14) with which the pressure in the storage container (12) is determinable, and
means for detecting the control data of the injection valves (18),
**characterized by**
a processor (26) connected to a device (22), arranged in the fuel line (4), for measuring temporally resolved volumetric flow processes and to the pressure sensor (14) via data transmission lines (24) for the calculation of a rate-of-discharge curve by superposing the storage container flows calculated from the pressure developments measured by the pressure sensor (14) at the storage container (12) with the measured values of the device (22) for measuring temporally resolved volumetric flow processes in the fuel line (4).

2. The system for measuring injection processes in an internal combustion engine of claim 1, **characterized in that** a temperature sensor (16) is arranged at the storage container (12), which is connected to the processor (26).

3. The system for measuring injection processes in an internal combustion engine of one of claims 1 or 2, **characterized in that** a pressure sensor is arranged at the inlet of the high-pressure pump (8), which is connected to the processor (26).

4. The system for measuring injection processes in an internal combustion engine of claim 3, **characterized in that** a temperature sensor is arranged at the inlet of the high-pressure pump (8), which is connected to the processor (26).

5. The system for measuring injection processes in an internal combustion engine of one of the preceding claims, **characterized in that** a fuel return line (20) leads from the high-pressure pump (8) or from the storage container (12) to the tank (2) via a pressure regulation valve (19).

6. The system for measuring injection processes in an internal combustion engine of claim 5, **characterized in that** the fuel line (4) forms the fuel return line (20) in the portion where the device (22) for measuring temporally resolved volumetric flow processes is arranged.

7. A method for measuring injection processes in an internal combustion engine using a system of one of the preceding claims, the method comprising the following steps:
- transmitting to the processor (26) the control times determined through the means for determining the control data, the measured values of the pressure sensor (14) at the storage container (12) and the measured values of the device (22) for measuring temporally resolved volumetric flow processes in the fuel line (4),
- calculating the rate-of-discharge curve of the injection valves (18) in the processor (26) by superposing the storage container flows calculated from the pressure developments measured by the pressure sensor (14) at the storage container (12) with the measured values of the device (22) for measuring temporally resolved volumetric flow processes in the fuel line (4).

8. A method for measuring injection processes in an internal combustion engine of claim 7, **characterized in that**
- the temperature in the storage container (12) is measured using the temperature sensor (16) at the storage container (12),
- the temperature curve is transmitted to the processor (26),
- the compressibility module of the fuel is calculated in the processor (26), and
- the compressibility module is used in determining the rate-of-discharge curve.

9. A method for measuring injection processes in an internal combustion engine of claim 7 or 8, **characterized in that**
- the measured values of the pressure sensor at the inlet of the high-pressure pump (8) are transmitted to the processor (26),
- from the measured values, a high-pressure pump flow of the high-pressure pump (8) is calculated in the processor (26), and
- the calculated flow is superposed with the measured values of the device (22) for measuring temporally resolved volumetric flow processes in the fuel line (4) and the calculated storage container flows, and a corrected rate-of-discharge curve is calculated therefrom.

10. A method for measuring injection processes in an internal combustion engine of claim 9, **characterized in that**
- the temperature at the inlet of the high-pressure pump (8) is measured using the temperature sensor at the inlet of the high-pressure pump (8),
- the temperature curve is transmitted to the processor (26),
- the compressibility module of the fuel at the high-pressure pump (8) is calculated in the processor (26), and
- the compressibility module is used in determining the high-pressure pump flow.

## Revendications

1. Système pour mesurer des évènements d'injection dans une machine à combustion interne, comprenant
un réservoir (2) contenant du carburant,
un récipient de stockage (12) stockant du carburant comprimé,
au moins une soupape d'injection (18) disposée au récipient de stockage (12),
une ligne de carburant (4) dans laquelle sont disposées une pompe de circulation de carburant (6) et une pompe de carburant à haute pression (8) pour le refoulement de carburant dans ledit récipient de stockage (12),
un capteur de pression (14) permettant de déterminer la pression dans ledit récipient de stockage (12), et
des moyens pour détecter les données de commande des soupapes d'injection (18),
**caractérisé par**
une unité de calcul (28) liée à un dispositif (22) de mesure des évènements de débit volumétriques avec résolution dans le temps, disposé dans la ligne de carburant (4), et au capteur de pression (14) par des lignes de transmission de données (24) pour calculer une courbe d'injection par superposition des débits à travers ledit récipient de stockage, calculés à partir des courbes de pression du capteur de pression (14) au récipient de stockage (12), et des valeurs de mesure du dispositif (22) de mesure des évènements de débit volumétriques avec résolution dans le temps dans la ligne de carburant (4).

2. Système pour mesurer des évènements d'injection dans une machine à combustion interne selon la revendication 1, **caractérisé en ce qu'**un capteur de température (16) est disposé au récipient de stockage (12), le capteur étant lié à l'unité de calcul (26).

3. Système pour mesurer des évènements d'injection dans une machine à combustion interne selon l'une quelconque des revendications 1 ou 2, **caractérisé en ce qu'**un capteur de pression est disposé à l'entrée de pompe de carburant à haute pression (8), ledit capteur étant lié à l'unité de calcul (26).

4. Système pour mesurer des évènements d'injection dans une machine à combustion interne selon la revendication 3, **caractérisé en ce qu'**un capteur de température est disposé à l'entrée de pompe de carburant à haute pression (8), ledit capteur étant lié à l'unité de calcul (26).

5. Système pour mesurer des évènements d'injection dans une machine à combustion interne selon l'une quelconque des revendications précédentes, **caractérisé en ce qu'**une ligne de recirculation de carburant (20) s'étend de ladite de pompe de carburant à haute pression (8) ou dudit récipient de stockage (12) jusqu'au réservoir (2), passant par une soupape de réglage de pression (19).

6. Système pour mesurer des évènements d'injection dans une machine à combustion interne selon la revendication 5, **caractérisé en ce que** ladite ligne de carburant (4) forme la ligne de recirculation de carburant (20) dans la région dans laquelle est disposé ledit dispositif (22) de mesure des évènements de débit volumétriques avec résolution dans le temps.

7. Procédé pour mesurer des évènements d'injection dans une machine à combustion interne par le biais d'un système selon l'une quelconque des revendications précédentes, comprenant des étapes suivantes:
- transmettre à ladite unité de calcul (26) les temps de commande déterminés par les moyens pour détecter les données de commande, les valeurs de mesure du capteur de pression (14) au récipient de stockage (12) et les valeurs de mesure du dispositif (22) de mesure des évènements de débit volumétriques avec résolution dans le temps dans la ligne (4),
- calculer, dans ladite unité de calcul (26), la courbe d'injection des soupapes d'injection (18) par superposition des débits à travers ledit récipient de stockage, calculés à partir des courbes de pression du capteur de pression (14) mesurées au récipient de stockage (12), et des valeurs de mesure du dispositif (22) de mesure des évènements de débit volumétriques avec résolution dans le temps dans la ligne de carburant (4).

8. Procédé pour mesurer des évènements d'injection dans une machine à combustion interne selon la revendication 7, **caractérisé en ce que**
- la température dans ledit récipient de stockage (12) est mesurée par le biais du capteur de température (16) au récipient de stockage (12),
- la courbe de température est transmise à l'unité de calcul (26),
- dans l'unité de calcul (26), le module de compressibilité du carburant est calculé, et
- le module de compressibilité est utilisé dans la détermination de la courbe de quantité d'injection.

9. Procédé pour mesurer des évènements d'injection dans une machine à combustion interne selon l'une quelconque des revendications 7 ou 8, **caractérisé en ce que**
- les valeurs de mesure du capteur de pression à l'entrée de pompe à haute pression (8) sont transmises à l'unité de calcul (26),
- à partir des valeurs de mesure, un débit de la pompe à haute pression de la pompe à haute pression (8) est calculé dans ladite unité de calcul (26),
- le débit calculé est superposé avec les valeurs de mesure du dispositif (22) de mesure des évènements de débit volumétriques avec résolution dans le temps dans la ligne de carburant (4) et les débits à travers ledit récipient de stockage calculés, et une courbe de quantité d'injection corrigée est calculée à partir de ces valeurs.

10. Procédé pour mesurer des évènements d'injection dans une machine à combustion interne selon la revendication 9, **caractérisé en ce que**
- la température à l'entrée de la pompe à haute pression (8) est mesurée par le capteur de température à l'entrée de la pompe à haute pression (8),
- la courbe de température est transmise à l'unité de calcul (26),
- l'unité de calcul (26) calcule le module de compressibilité du carburant à la pompe à haute pression (8), et
- le module de compressibilité calculé est utilisé dans la détermination du débit de la pompe à haute pression.
